(19) **Europäisches Patentamt**

**European Patent Office**

**Office européen des brevets**

(11) **EP 1 347 163 B1**

(12) **FASCICULE DE BREVET EUROPEEN**

(45) Date de publication et mention
de la délivrance du brevet:
**18.10.2006 Bulletin 2006/42**

(51) Int Cl.:
*F02D 41/14* (2006.01)     *F02D 41/22* (2006.01)

(21) Numéro de dépôt: **03290660.4**

(22) Date de dépôt: **17.03.2003**

(54) **Procédé d'estimation du couple de pompage d'un moteur thermique pour véhicule automobile**

Verfahren zur Schätzung der Pumpverluste in einer Brennkraftmaschine

Method for estimating pumping loss in an internal combustion engine

(84) Etats contractants désignés:
**DE ES GB IT**

(30) Priorité: **21.03.2002 FR 0203543**

(43) Date de publication de la demande:
**24.09.2003 Bulletin 2003/39**

(73) Titulaire: **Renault s.a.s.**
**92100 Boulogne Billancourt (FR)**

(72) Inventeurs:
• **Cruchet, Jérôme**
**91650 Breuillet (FR)**
• **Mounetou, Christophe**
**92240 Malakoff (FR)**
• **Lafon, Patrick**
**92100 Boulogne (FR)**

(56) Documents cités:
**FR-A- 2 776 066**     **US-B1- 6 188 951**

• **PATENT ABSTRACTS OF JAPAN vol. 017, no. 002 (M-1348), 5 janvier 1993 (1993-01-05) & JP 04 236852 A (JAPAN ELECTRON CONTROL SYST CO LTD), 25 août 1992 (1992-08-25)**
• **PATENT ABSTRACTS OF JAPAN vol. 2000, no. 05, 14 septembre 2000 (2000-09-14) & JP 2000 064900 A (HONDA MOTOR CO LTD), 29 février 2000 (2000-02-29)**

**EP 1 347 163 B1**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Printed by Jouve, 75001 PARIS (FR)

**Description**

La présente invention concerne un procédé d'estimation du couple de pompage d'un moteur thermique de véhicule automobile, notamment de véhicule équipé d'un moteur Diesel à injection directe contrôlée électroniquement avec un filtre à particules dans la ligne d'échappement.

Actuellement, dans la demande de brevet No. 2 808 559, déposée au nom de ECIA INDUSTRIE, est décrit un système de contrôle du fonctionnement d'une ligne d'échappement d'un moteur Diesel équipé d'un filtre à particules, comportant des moyens d'évaluation de la pression différentielle entre deux points situés en amont et en aval du filtre. A partir de l'évaluation de cette pression différentielle, une unité centrale de traitement commande une vanne d'obturation de la ligne d'échappement et des injecteurs de carburant afin d'alimenter le moteur selon la demande du conducteur.

Dans cette demande, il n'est pas mentionné le problème de l'estimation du couple de pompage du moteur dû au filtre à particules, qui détériore l'agrément de conduite en diminuant la puissance du moteur par augmentation des pertes moteur.

Le but de l'invention est d'estimer le couple de pompage dû en partie au filtre à particules placé dans la ligne d'échappement et dû également au volet éventuellement placé dans la ligne d'admission, en le traitant différemment des autres pertes moteur en couple considérées actuellement.

Pour cela, un premier objet de l'invention est un procédé d'estimation du couple de pompage d'un moteur thermique pour véhicule automobile, à injection de carburant contrôlée par un calculateur électronique, à partir de la cylindrée $\Delta V$ du moteur et de la différence de pression $\Delta P$ entre la pression $P_{col}$ dans le collecteur et la pression $P_{ex}$ des gaz d'échappement, caractérisé en ce qu'il consiste à affecter le produit de la cylindrée par la différence de pression d'un coefficient de rendement de forme $\eta$ considéré comme le produit d'un premier coefficient $\eta_1$ dépendant de la différence entre la pression collecteur $P_{col}$ et la pression à l'échappement $P_{ex}$ et d'un second coefficient $\eta_2$ dépendant du régime $N$ du moteur et de la pression $P_{col}$ en entrée du collecteur d'admission d'air et à considérer que le couple moyen indiqué de pompage $CMI_{bp}$ est égal à :

$$CMI_{bp} = \eta * \frac{\Delta V * \Delta P}{\Pi} = \eta_1 * \eta_2 * \frac{\Delta V * \left(P_{col} - P_{ex}\right)}{\Pi}$$

Un deuxième objet de l'invention est un procédé d'estimation du couple de pompage d'un moteur thermique à injection de carburant contrôlée par un calculateur électronique, à partir de la cylindrée $\Delta V$ du moteur et de la différence de pression $\Delta P$ entre la pression $P_{col}$ dans le collecteur et la pression $P_{ex}$ des gaz d'échappement, caractérisé en ce qu'il consiste à affecter le produit de la cylindrée par la différence de pression d'un coefficient de rendement de forme $(\eta_1)$ dépendant de la différence entre la pression collecteur $P_{col}$ et la pression à l'échappement $P_{ex}$ et à considérer que le couple moyen indiqué $CMI_{bp}$ de pompage est égal à :

$$CMI_{bp} = \eta_1 * \frac{\Delta V * \Delta P}{\Pi} = \eta_1 * \frac{\Delta V * \left(P_{col} - P_{ex}\right)}{\Pi} = \eta_1 \left(P_{col} - P_{ex}\right) * \frac{\Delta V * \left(P_{col} - P_{ex}\right)}{\Pi}$$

Un troisième objet de l'invention est un procédé d'estimation du couple de pompage d'un moteur thermique à injection de carburant contrôlée par un calculateur électronique, à partir de la cylindrée $\Delta V$ du moteur et de la différence de pression $\Delta P$ entre la pression $P_{col}$ dans le collecteur et la pression $P_{ex}$ des gaz d'échappement, caractérisé en ce qu'il consiste à affecter le produit de la cylindrée par la différence de pression d'un coefficient de rendement de forme $\eta_2$ dépendant du régime $N$ du moteur et de la pression $P_{col}$ en entrée du collecteur d'admission d'air et à considérer que le couple moyen indiqué $CMI_{bp}$ de pompage est égal à :

$$CMI_{bp} = \eta_2 * \frac{\Delta V * \Delta P}{\Pi} = \eta_2 * \frac{\Delta V * \left(P_{col} - P_{ex}\right)}{\Pi} = \eta_2 \left(N, P_{col}\right) * \frac{\Delta V * \left(P_{col} - P_{ex}\right)}{\Pi}$$

Selon une autre caractéristique de l'invention, ledit premier coefficient de rendement de forme $\eta_1$ est déterminé

par cartographie, établie selon un nombre de points défini en fonction de la précision des calculs et extrapolations souhaités, et dépendant de la différence entre la pression collecteur $P_{col}$ et la pression avant turbine $P_{ex}$ , et ledit second coefficient $\eta_2$ de rendement de forme est établi à partir d'une cartographie réalisée selon des points supports prédéfinis en fonction du régime moteur N et de la pression $P_{col}$ en entrée du collecteur, qui est égale à la pression $P_{sural}$ de suralimentation quand un turbo-compresseur est placé dans le circuit d'admission d'air.

Selon une autre caractéristique, dans le cas d'un moteur de véhicule automobile où un volet d'admission est commandé en fermeture partielle ou quasi totale et où le capteur de mesure de la pression $P_{col}$ est placé en amont du volet d'admission et en aval du turbo-compresseur, le procédé selon l'invention réalise de plus une évaluation de la pression $P_{col}$ dans le collecteur d'admission d'air à partir de la pression $P_{sural}$ de suralimentation à laquelle on retire une valeur qui tient compte du débit d'air $Q_{air}$ circulant avant le volet d'admission et de la commande d'ouverture dudit volet exprimée en pourcentage d'ouverture, cette valeur étant le produit du carré du débit d'air par la section effective S d'ouverture du volet d'admission affectée d'un coefficient k, le produit de la section S par k étant lui-même fonction de la commande d'ouverture du volet d'admission, envoyée par le calculateur électronique d'injection, et du débit d'air $Q_{air}$, de telle sorte que l'expression de la pression collecteur est la suivante :

$$P_{col} = P_{sural} - k * S * Q_{air}^2$$

Selon une autre caractéristique, le procédé selon l'invention comporte une phase de mode dégradé en cas de panne détectée du capteur de pression des gaz d'échappement comprenant les étapes suivantes :

- mesure de la pression atmosphérique $P_{atm}$,
- mesure de la pression différentielle $\Delta P_{fap}$ aux bornes du filtre à particules,
- délivrance de la pression $P_{ex}$ des gaz brûlés en sortie du moteur,
- détection d'une panne du capteur de pression des gaz d'échappement,
- estimation de la pression $P_{ex}$ des gaz d'échappement à partir de la somme de la pression atmosphérique et de la pression différentielle $\Delta P_{fap}$ aux bornes du filtre à particules :

$$P_{ex} = P_{atm} + \Delta P_{fap}$$

D'autres caractéristiques et avantages de l'invention apparaîtront à la lecture de la description d'une ligne d'échappement associée à un moteur Diesel de véhicule automobile, pour laquelle on détermine le couple de pompage, illustrée par les figures suivantes qui sont :

- la figure 1 : une vue schématique d'une ligne d'échappement avec filtre à particules, associée à un moteur Diesel ;
- la figure 2 : une représentation schématique des différents couples résistants s'opposant au couple demandé par le conducteur;
- la figure 3 : les variations de la pression dans un cylindre en fonction des variations de son volume ;
- la figure 4: un schéma des différentes étapes du procédé d'estimation du couple de pompage,
- la figure 5 : un schéma des différentes étapes de la phase d'évaluation de la pression dans le collecteur ;
- la figure 6 : un schéma dés différentes étapes d'une phase de mode dégradé en cas de panne détectée du capteur de pression des gaz d'échappement.

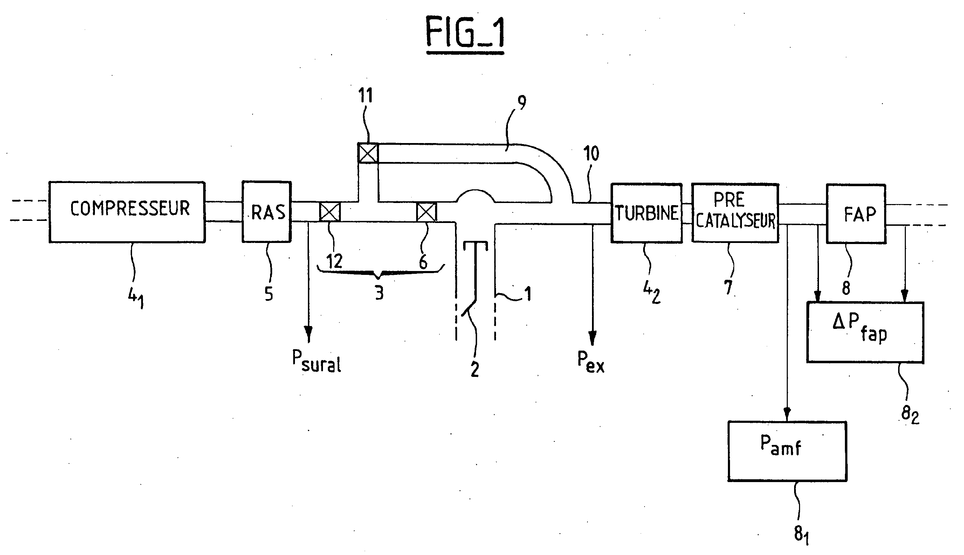

Sur la figure 1, représentant schématiquement une ligne d'échappement d'un moteur Diesel de véhicule automobile, doté d'un filtre à particules et d'un circuit de recirculation des gaz d'échappement, est représenté un des cylindres 1 avec piston 2 en communication avec le collecteur 3 d'admission d'air, ou répartiteur d'admission, qui est généralement doté d'un turbo-compresseur dans le cas d'un moteur Diesel, composé d'un compresseur $4_1$ en amont du moteur et d'une turbine $4_2$ en aval dans la ligne d'échappement 10. A ce turbo-compresseur est éventuellement associé un circuit 5 de refroidissement d'air de suralimentation, destiné à diminuer la température de l'air devant être admis dans les cylindres. En entrée de chaque cylindre, peut être placé un volet 6 dit de « swirl », destiné à faire varier la quantité d'air entrant par l'une des deux soupapes d'admission de structures différentes, l'une étant droite et l'autre étant coudée en hélice pour augmenter le tourbillon d'air dans le cylindre. Dans la ligne d'échappement 10, après la turbine $4_2$ et avant un filtre à particules 8 est monté un pré-catalyseur 7.

Pour améliorer la dépollution du moteur à injection directe de carburant, contrôlée par un calculateur électronique, on crée un circuit 9 de recirculation d'une partie des gaz d'échappement dans le collecteur d'admission 3, obtenu grâce à une vanne 11 dite d'EGR - Exhaust Gas Recirculation -. De plus, un volet 12 d'admission est placé en amont du moteur pour diminuer au besoin le débit d'air frais dans le collecteur d'admission.

Le filtre à particules 8 est destiné à arrêter les suies des gaz brûlés pour respecter les normes anti-pollution, mais peut constituer un bouchon augmentant les pertes moteur dont le rendement devient moins bon. La pression $P_{amf}$ en amont du filtre à particules est mesurée par un capteur $8_1$, et la différence de pression $\Delta P_{fap}$ aux bornes dudit filtre 8 est mesurée également par un capteur différentiel $8_2$. Si le filtre à particules est encrassé, pour une même valeur de couple souhaitée par le conducteur, la pression amont $P_{amf}$ croît et le couple moteur décroît.

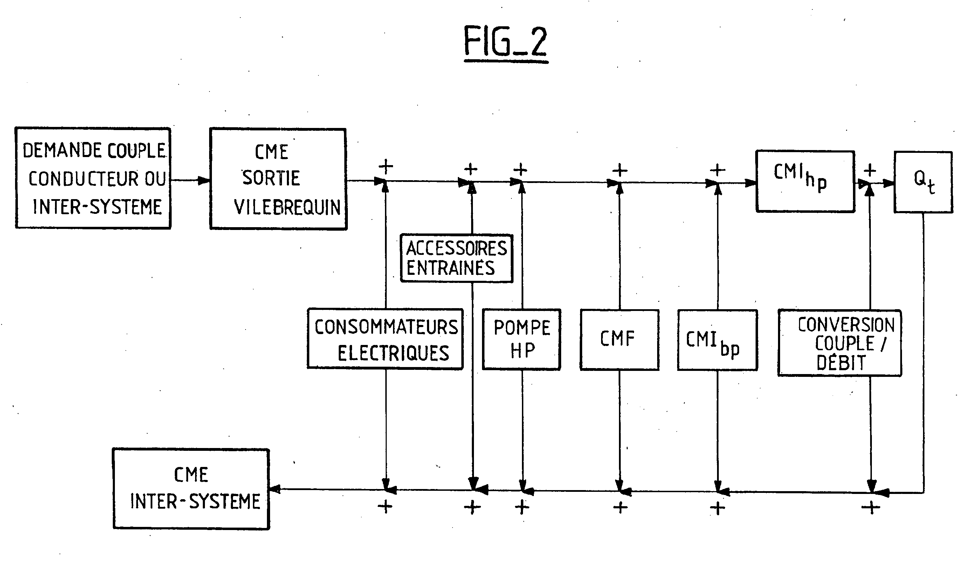

A partir de la demande de couple du conducteur et du couple moteur effectif CME en sortie du vilebrequin, on doit tenir compte de tous les couples résistants provenant des consommateurs électriques comme les feux de signalisation, les essuie-glaces ..., des consommateurs mécaniques comme la pompe haute pression d'injection du carburant, des accessoires entraînés comme la climatisation ou la pompe d'assistance de la direction, ainsi que du couple moyen de frottement CMF dans le moteur auquel s'ajoute le pompage naturel et le couple de pompage dû au filtre à particules. Le couple $CMI_{bp}$ calculée alors est le couple de pompage global, comprenant le couple de pompage naturel dumoteur, le couple de pompage dû aux divers vannages présents sur la ligne d'admission et sur la ligne d'échappement, dont le filtre à particules. La figure 2 est une représentation schématique des différents couples résistants précédemment énoncés.

Tous ces couples résistants sont ajoutés à la demande conducteur afin d'obtenir un ressenti identique pour une même position de la pédale d'accélérateur, quel que soit le couple de pompage ou plus généralement quelque soient toutes les pertes ramenées au moteur. Il en résulte un couple moyen indiqué en boucle haute pression $CMI_{hp}$ du cycle $\Delta P * \Delta V$ correspondant à une quantité totale de carburant injectée $Q_{inj}$. Actuellement, le couple de pompage de la boucle basse pression $CMI_{bp}$, dû aux phases d'admission et d'échappement dans les cylindres en même temps qu'au filtre à particules et autres vannages, n'est pas dissocié du couple de frottement moteur des pièces mécaniques du moteur et leur estimation est globale, établie à partir d'une cartographie dépendant essentiellement de la température d'eau du moteur et du régime. Or c'est une estimation grossière du couple de pompage dont la valeur réelle est différente. En effet, au couple de pompage naturel du moteur apparaissant dans chaque cylindre en phases d'admission et d'échappement quand le moteur consomme de l'énergie, s'ajoute le couple de pompage dû au filtre à particules qui augmente les pertes du moteur et qui est aggravé par le vannage du volet d'admission. Le couple moyen estimé CME est estimé à partir du couple moyen CMI et des pertes en couple. Cette estimation du CME est renvoyée, par l'intermédiaire du réseau multiplexé du véhicule, vers les inter-systèmes, tels que les calculateurs de la boîte de vitesses automatique BVA, du système d'anti-patinage, ou du contrôle de la distance ACC par exemple, qui peuvent prendre la main sur la volonté du conducteur. La finesse de l'estimation du couple CME vis à vis du couple réel rend le plus transparent possible la transition lorsque l'inter-système prend ou rend la main au conducteur.

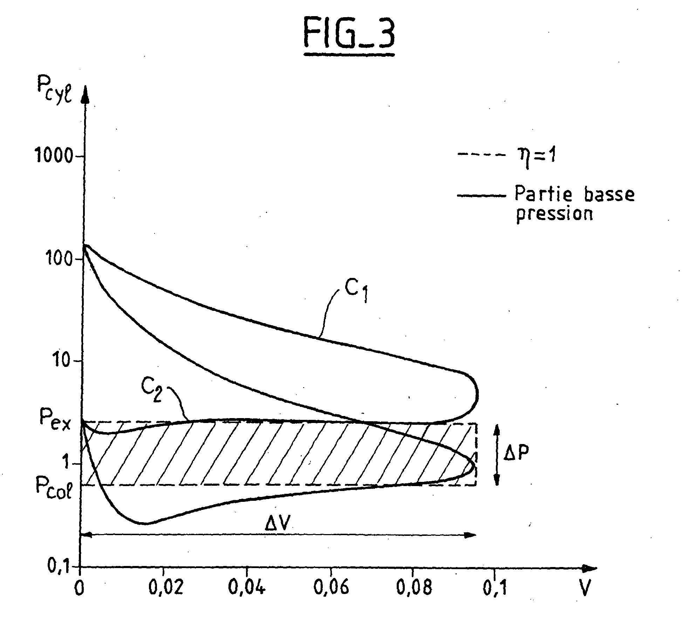

La figure 3 représente les variations de la pression $P_{cyl}$ dans le cylindre, exprimée en bars sur une échelle logarithmique, en fonction de sa variation de volume interne, exprimé en $m^3$, pendant le déplacement du piston, lors des quatre temps moteur. La partie $C_1$ de la courbe correspond aux phases de combustion et de compression, et la partie $C_2$ de la courbe ou boucle basse pression correspond aux phases d'admission et d'échappement. La surface définie par cette partie $C_2$ de la courbe représente le couple de pompage basse pression $CMI_{bp}$ pour un cycle.

Aussi, il n'est pas exact de considérer le couple moyen indiqué de pompage $CMI_{bp}$, pour les quatre cylindres d'un moteur, comme le produit de la différence de pression $\Delta P$ entre la pression collecteur $P_{col}$ à l'admission et la pression à l'échappement $P_{ex}$ dans chaque cylindre par la cylindrée $\Delta V$, divisé par $\pi$, ce produit correspondant à la surface hachurée, qui peut être plus petite ou plus grande qu'en réalité.

La caractéristique de l'invention est d'estimer le couple de pompage global, tenant compte de toutes les pertes par pompage, soit pertes en admission et échappement, pertes dues à divers vannages, au filtre à particules, pompage naturel du moteur..., à partir de ce produit, affecté d'un coefficient $\eta$ de rendement de forme, qui peut être considéré comme le produit d'un premier coefficient $\eta_1$ dépendant de la différence entre la pression collecteur $P_{col}$ et la pression à l'échappement $P_{ex}$, et d'un second coefficient $\eta_2$ dépendant du régime N du moteur et de la pression $P_{sural}$ de suralimentation en entrée du collecteur d'admission d'air, produite par le turbo-compresseur. Si le moteur n'est pas équipé d'un turbo, la pression prise en compte est la pression $P_{col}$ dans le collecteur. Le couple de pompage basse pression $CMI_{bp}$ est exprimé selon l'équation suivante :

$$CMI_{bp} = \eta * \frac{\Delta V * \Delta P}{\Pi} = \eta_1 * \eta_2 * \frac{\Delta V * \left(P_{col} - P_{ex}\right)}{\Pi}$$

$$CMI_{bp} = \eta_1 \left(P_{col} - P_{ex}\right) * \eta_2 \left(N, P_{col}\right) * \frac{\Delta V * \left(P_{col} - P_{ex}\right)}{\Pi}$$

Le premier coefficient de rendement de forme $\eta_1(P_{col} - P_{ex})$ est déterminé par une cartographie qui dépend de $\Delta P = P_{col} - P_{ex}$, la différence entre la pression collecteur et la pression à l'échappement avant turbine, cette cartographie étant établie selon un nombre $N_1$ de points d'appui défini selon la précision des calculs et extrapolations souhaités. Dans l'équation, $\Delta V$ est la cylindrée, qui est une constante pour un moteur donné.

Le second coefficient de rendement de forme $\eta_2(N, P_{col})$ est établi à partir d'une cartographie réalisée en fonction du régime N mesuré et de la pression en entrée du collecteur, soit $P_{col}$ ou $P_{sural}$ suivant la pose d'un turbo-compresseur dans le circuit d'admission d'air, selon des points d'appui en nombres $N_3$ et $N_4$ respectivement prédéfinis selon la précision des calculs et extrapolations souhaités

Généralement, la différence de pression $\Delta P$ est négative, donc le rendement de forme $\eta$ est positif pour que le couple de pompage soit négatif, correspondant à des pertes à compenser.

Le coefficient de rendement de forme, qui tient compte de la forme de la boucle basse pression par rapport à un rectangle, est déterminé de plus afin que le couple de pompage ne soit pas inférieur à un seuil minimal $S_m$, qui est voisin de - 40 Newton dans certains cas expérimentaux, et qu'il soit écrêté à un seuil maximal $S_M$ égal à zéro dans le cas où on ne veut pas avoir de valeurs de couple de pompage positives.

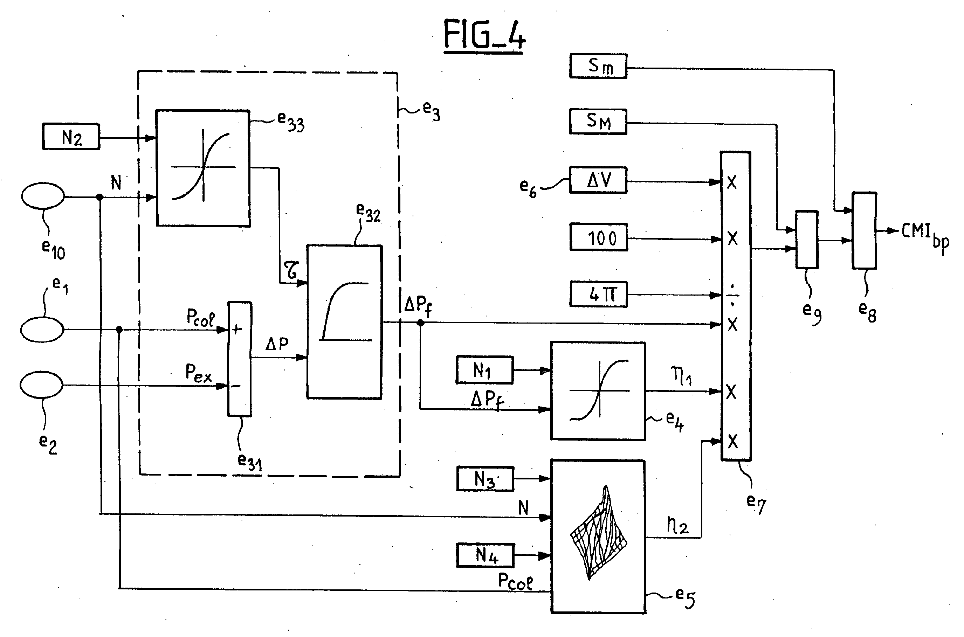

La figure 4 est un schéma des différentes étapes du procédé d'estimation du couple de pompage selon l'invention. A partir de l'étape $e_1$) de délivrance de la pression $P_{col}$ dans le collecteur d'admission d'air, par mesure ou estimation, et de la délivrance $e_2$) de la pression $P_{ex}$ à l'échappement par mesure ou estimation, l'étape $e_3$) consiste à calculer leur différence $\Delta P_f$ filtrée en fonction du régime moteur N mesuré à l'étape $e_{10}$). L'étape $e_4$) consiste à choisir un coefficient $\eta_1$ à partir d'une cartographie en fonction de la différence de pression $\Delta P_f$, selon un nombre $N_1$ déterminé de points supports. Le second coefficient de rendement de forme $\eta_2(N, P_{col})$ est établi à partir d'une cartographie réalisé à l'étape $e_5$) selon des points d'appui $N_3$ et $N_4$ respectivement prédéfinis en fonction du régime N mesuré à l'étape $e_{10}$) et de la pression en entrée du collecteur; soit $P_{col}$ ou $P_{sural}$ suivant la pose d'un turbo-compresseur dans le circuit d'admission d'air. L'étape $e_6$) délivre la valeur de la cylindrée $\Delta V$ du moteur, qui sera multipliée d'une part par la différence de pression filtrée $\Delta P_f$ et d'autre part par le produit des deux coefficients de rendement de forme $\eta_1$ et et $\eta_2$ dans une étape $e_7$).

Ce produit est divisé par $4\pi$ correspondant à deux tours moteur et multiplié par 100 pour que le résultat soit en unités internationales alors que le calculateur électronique travaille en millibars ou en hectopascals, et que la cylindrée $\Delta V$ est convertie en $m^3$.

Ce couple moyen indiqué $CMI_{bp}$ ainsi calculé pour tous les cylindres est bridé par un seuil maximum $S_M$ dans une étape $e_9$) et par un seuil minimum $S_m$ dans une étape $e_8$).

L'étape $e_3$) de calcul de la différence de pression $\Delta P_f$ filtrée entre la pression collecteur $P_{col}$ et la pression à l'échappement $P_{ex}$ se subdivise en trois étapes. Cette différence $\Delta P$ doit être filtrée à cause de la pression dans les collecteurs que sont le répartiteur d'admission et le collecteur d'échappement, qui n'est jamais vraiment constante, mais présente des pulsations car la mesure prend en compte tous les cylindres en même temps. Ainsi, la différence de pression, qui est calculée à l'étape $e_{31}$) à partir de deux pressions mesurées, est filtrée dans un filtre passe-bas du premier ordre à l'étape $e_{32}$), dont la constante de temps $\tau$ est établie par une cartographie dans l'étape $e_{33}$) dépendant du régime moteur N mesuré à l'étape $e_{10}$), sur un nombre $N_2$ de points supports prédéfini. L'étape $e_{32}$) délivre la différence de pression $\Delta P_f$, d'autant plus filtrée que le régime moteur est bas.

Selon une autre caractéristique, le procédé selon l'invention consiste à affecter le produit de la cylindrée par la différence de pression d'un coefficient de rendement de forme $\eta_1$ dépendant de la différence entre la pression collecteur $P_{col}$ et la pression à l'échappement $P_{ex}$ et à considérer que le couple moyen indiqué $CMI_{bp}$ de pompage est égal à :

$$CMI_{bp} = \eta_1 * \frac{\Delta V * \Delta P}{\Pi} = \eta_1 * \frac{\Delta V * \left(P_{col} - P_{ex}\right)}{\Pi} = \eta_1 \left(P_{col} - P_{ex}\right) * \frac{\Delta V * \left(P_{col} - P_{ex}\right)}{\Pi}$$

Selon une autre caractéristique, le procédé selon l'invention consiste à affecter le produit de la cylindrée par la différence de pression d'un coefficient $\eta_2$ dépendant du régime N du moteur et de la pression $P_{col}$ en entrée du collecteur d'admission d'air, et à considérer que le couple moyen indiqué $CMI_{bp}$ de pompage est égal à :

$$CMI_{bp} = \eta_2 * \frac{\Delta V * \Delta P}{\Pi} = \eta_2 * \frac{\Delta V * \left(P_{col} - P_{ex}\right)}{\Pi} = \eta_2\left(N, P_{col}\right) * \frac{\Delta V * \left(P_{col} - P_{ex}\right)}{\Pi}$$

Selon une autre caractéristique de l'invention, le procédé d'estimation réalise de plus une évaluation de la pression $P_{col}$ dans le collecteur, dans le cas d'un moteur où la mesure exacte de la pression $P_{col}$ dans le collecteur 3 d'admission ne peut être faite car le capteur est placé en réalité en amont du volet 12 d'admission. Aussi, la pression réellement mesurée est la pression de suralimentation en aval du turbo-compresseur $4_1$, qui est égale à la pression dans le collecteur lorsque ledit volet d'admission est totalement ouvert. Pour que l'estimation du couple de pompage d'un tel moteur soit la plus juste possible, il faut évaluer au plus juste la pression dans le collecteur, dans les cas où le volet d'admission est commandé en fermeture partielle ou quasi totale.

Selon l'invention, la pression $P_{col}$ dans le collecteur est évaluée à partir de la pression $P_{sural}$ de suralimentation à laquelle on retire une valeur tenant compte du débit d'air $Q_{air}$ circulant avant le volet d'admission et de la commande d'ouverture $C_0$ dudit volet exprimée en pourcentage d'ouverture. Cette valeur est le produit du carré du débit d'air par la section effective S d'ouverture du volet d'admission affectée d'un coefficient k, le produit de la section S par k étant fonction de la commande d'ouverture du volet d'admission, ou rapport cyclique d'ouverture, envoyée par le calculateur électronique d'injection et du débit d'air $Q_{air}$. La valeur de ce produit k*S est notamment calculé par cartographie à partir de la commande d'ouverture $C_0$ du volet d'admission envoyée par le calculateur électronique d'injection et du débit d'air $Q_{air}$.

L'expression de la pression collecteur est alors la suivante :

$$P_{col} = P_{sural} - k * S * Q_{air}^2$$

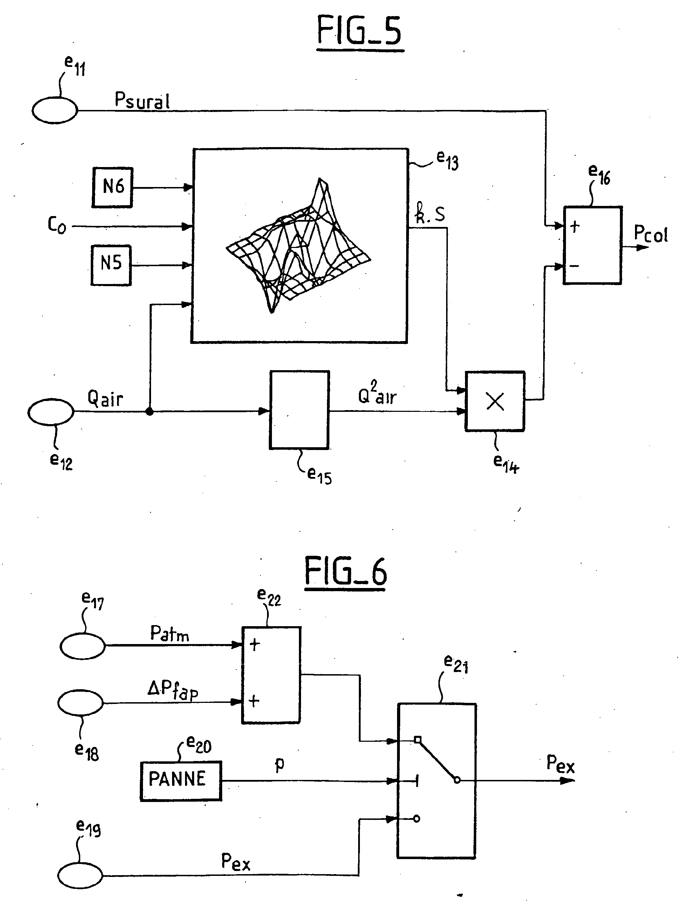

La figure 5 est un schéma des différentes étapes de la phase d'évaluation de la pression dans le collecteur. La pression $P_{sural}$ de suralimentation étant mesurée à l'étape $e_{11}$) et le débit d'air $Q_{air}$ en amont du volet d'admission étant mesuré à l'étape $e_{12}$), une étape $e_{13}$) établit la cartographie de la section effective S d'ouverture du volet d'admission affectée d'un coefficient k, à partir de ce débit d'air $Q_{air}$ et de la commande d'ouverture $C_o$ du volet, selon des tables prédéfinies $N_5$ et $N_6$ respectivement de points supports. Le produit k*S est ensuite multiplié à l'étape $e_{14}$) au carré du débit d'air calculé à l'étape $e_{15}$), le résultat étant retranché à la pression de suralimentation à l'étape $e_{16}$) pour délivrer l'estimation de la pression collecteur $P_{col}$. Cette phase d'évaluation est totalement neutre quand le volet d'admission est ouvert ou non commandé.

Selon une caractéristique de l'invention, le procédé d'estimation du couple de pompage prévoit une phase de mode dégradé en cas de panne détectée du capteur de pression des gaz d'échappement pour un moteur équipé d'un filtre à particules. Cette phase, représentée sur la figure 6, comprend les étapes suivantes :

- une étape $e_{17}$) de mesure de la pression atmosphérique $P_{atm}$,
- une étape $e_{18}$) de mesure de la pression différentielle $\Delta P_{fap}$ aux bornes du filtre à particules 8, effectuée par un capteur $8_2$,
- une étape $e_{19}$) de délivrance de la pression $P_{ex}$ des gaz brûlés en sortie du moteur, par mesure ou estimation,
- une étape $e_{20}$) de détection d'une panne p du capteur de cette pression $P_{ex}$ des gaz d'échappement.

Lorsqu'une panne est détectée, la phase comporte une étape $e_{21}$) de basculement de la mesure de $P_{ex}$ par le capteur vers une étape $e_{22}$) de prise en compte de la pression atmosphérique et de la pression différentielle aux bornes du filtre à particules qui sont alors additionnées pour estimer la pression des gaz d'échappement alors que le capteur est défaillant. La pression $P_{ex}$ des gaz d'échappement est estimée à partir de la somme de la pression atmosphérique et de la pression différentielle $\Delta P_{fap}$ aux bornes du filtre à particules selon l'expression suivante :

$$P_{ex} = P_{atm} + \Delta P_{fap}$$

L'intérêt d'estimer le couple de pompage indépendamment du couple de frottement et des autres couples résistants réside dans le fait que les paramètres influents étant différents, ainsi le couple de frottement est fonction de la température d'eau du moteur et du régime alors que le couple de pompage dépend de la différence de pression

$\Delta P_{Pcol-Pex}$, on ne peut pas estimer correctement la partie pompage en utilisant les même paramètres d'entrée que pour le couple de frottement.

**Revendications**

1. Procédé d'estimation du couple de pompage d'un moteur thermique pour véhicule automobile, à injection de carburant contrôlée par un calculateur électronique, à partir de la cylindrée ($\Delta V$) du moteur et de la différence de pression ($\Delta P$) entre la pression ($P_{col}$) dans le collecteur et la pression ($P_{ex}$) des gaz d'échappement, **caractérisé en ce qu'**il consiste à affecter le produit de la cylindrée par la différence de pression d'un coefficient de rendement de forme ($\eta$) considéré comme le produit d'un premier coefficient ($\eta_1$) dépendant de la différence entre la pression collecteur ($P_{col}$) et la pression à l'échappement ($P_{ex}$) et d'un second coefficient ($\eta_2$) dépendant du régime (N) du moteur et de la pression ($P_{col}$) en entrée du collecteur d'admission d'air et à considérer que le couple moyen indiqué ($CMI_{bp}$) de pompage est égal à :

$$CMI_{bp} = \eta * \frac{\Delta V * \Delta P}{\Pi} = \eta_1 * \eta_2 * \frac{\Delta V * (P_{col} - P_{ex})}{\Pi}$$

$$CMI_{bp} = \eta_1 (P_{col} - P_{ex}) * \eta_2 (N, P_{col}) * \frac{\Delta V * (P_{col} - P_{ex})}{\Pi}$$

2. Procédé d'estimation du couple de pompage d'un moteur thermique à injection de carburant contrôlée par un calculateur électronique, à partir de la cylindrée ($\Delta V$) du moteur et de la différence de pression ($\Delta P$) entre la pression ($P_{col}$) dans le collecteur et la pression ($P_{ex}$) des gaz d'échappement, **caractérisé en ce qu'**il consiste à affecter le produit de la cylindrée par la différence de pression d'un coefficient de rendement de forme ($\eta_1$) dépendant de la différence entre la pression collecteur ($P_{col}$) et la pression à l'échappement ($P_{ex}$) et à considérer que le couple moyen indiqué ($CMI_{bp}$) de pompage est égal à :

$$CMI_{bp} = \eta_1 * \frac{\Delta V * \Delta P}{\Pi} = \eta_1 * \frac{\Delta V * (P_{col} - P_{ex})}{\Pi} = \eta_1 (P_{col} - P_{ex}) * \frac{\Delta V * (P_{col} - P_{ex})}{\Pi}$$

3. Procédé d'estimation du couple de pompage d'un moteur thermique à injection de carburant contrôlée par un calculateur électronique, à partir de la cylindrée ($\Delta V$) du moteur et de la différence de pression ($\Delta P$) entre la pression ($P_{col}$) dans le collecteur et la pression ($P_{ex}$) des gaz d'échappement, **caractérisé en ce qu'**il consiste à affecter le produit de la cylindrée par la différence de pression d'un coefficient de rendement de forme ($\eta_2$) dépendant du régime (N) du moteur et de la pression ($P_{col}$) en entrée du collecteur d'admission d'air et à considérer que le couple moyen indiqué ($CMI_{bp}$) de pompage est égal à :

$$CMI_{bp} = \eta_2 * \frac{\Delta V * \Delta P}{\Pi} = \eta_2 * \frac{\Delta V * (P_{col} - P_{ex})}{\Pi} = \eta_2 (N, P_{col}) * \frac{\Delta V * (P_{col} - P_{ex})}{\Pi}$$

4. Procédé d'estimation selon l'une des revendications 1 ou 2, **caractérisé en ce que** ledit coefficient de rendement de forme ($\eta_1$) dépendant de la différence entre la pression collecteur ($P_{col}$) et la pression à l'échappement ($P_{ex}$) est déterminé par cartographie, établie selon un nombre de points supports défini en fonction de la précision des calculs et extrapolations souhaités, et dépendant de la différence entre la pression collecteur ($P_{col}$) et la pression avant turbine ($P_{ex}$).

5. Procédé d'estimation selon l'une des revendications 1 ou 3, **caractérisé en ce que** ledit coefficient ($\eta_2$) de rendement de forme est établi à partir d'une cartographie réalisée en fonction du régime (N) du moteur et de la pression ($P_{col}$)

en entrée du collecteur d'admission d'air, qui est égale à la pression ($P_{sural}$) de suralimentation quand un turbo-compresseur est placé dans le circuit d'admission d'air, selon un nombre de points supports défini en fonction de la précision des calculs et extrapolations souhaités.

6. Procédé d'estimation selon l'une des revendications 1, 2 ou 3, **caractérisé en ce que** ledit coefficient de rendement de forme ($\eta$, $\eta_1$, $\eta_2$) est déterminé afin que le couple moyen indiqué ($CMI_{bp}$) de pompage soit supérieur ou égal à un seuil minimal ($S_m$) et inférieur à un seuil maximal ($S_M$), voisin de zéro pour avoir des valeurs de couple uniquement négatives.

7. Procédé d'estimation selon l'une des revendications 1 ou 2, **caractérisé en ce que** la différence de pression ($\Delta P$) entre la pression ($P_{col}$) dans le collecteur et la pression ($P_{ex}$) des gaz d'échappement, calculée à partir des deux mesures de pression, est filtrée dans un filtre passe-bas du premier ordre, dont la constante de temps ($\tau$) est établie par une cartographie dépendant du régime (N) du moteur, sur un nombre de points supports prédéfini.

8. Procédé d'estimation selon l'une des revendications 1, 2 ou 3, **caractérisé en ce que** la pression ($P_{col}$) dans le collecteur est égale à la pression ($P_{sural}$) de suralimentation en entrée du collecteur produite par le turbo-compresseur quand le moteur en est équipé.

9. Procédé d'estimation selon l'une des revendications 1 à 8, **caractérisé en ce que**, dans le cas d'un moteur où un volet (12) d'admission est commandé en fermeture partielle ou quasi totale et où le capteur de mesure de la pression ($P_{col}$) est placé en amont du volet (12) d'admission et en aval du turbo-compresseur (4), il réalise de plus une évaluation de la pression ($P_{col}$) dans le collecteur d'admission d'air à partir de la pression ($P_{sural}$) de suralimentation à laquelle on retire une valeur qui tient compte du débit d'air ($Q_{air}$) circulant avant le volet d'admission et de la commande d'ouverture ($C_0$) dudit volet exprimée en pourcentage d'ouverture, cette valeur étant le produit du carré du débit d'air par la section effective (S) d'ouverture du volet d'admission affectée d'un coefficient (k), le produit de la section (S) par k étant lui-même fonction de la commande d'ouverture du volet d'admission, envoyée par le calculateur électronique d'injection, et du débit d'air ($Q_{air}$), de telle sorte que l'expression de la pression collecteur est la suivante :

$$P_{col} = P_{sural} - k * S * Q_{air}^2$$

10. Procédé d'estimation selon la revendication 9, **caractérisé en ce que** la valeur du produit (k*S) de la section effective d'ouverture du volet d'admission (S) par le coefficient (k) est calculée par cartographie à partir de la commande ($C_0$) d'ouverture du volet d'admission envoyée par le calculateur électronique d'injection et du débit d'air ($Q_{air}$).

11. Procédé d'estimation selon les revendications 1 à 10, **caractérisé en ce qu'**il comporte, dans le cas d'un moteur équipé d'un filtre à particules, une phase de mode dégradé en cas de panne détectée du capteur de pression des gaz d'échappement comprenant les étapes suivantes :

- mesure de la pression atmosphérique ($P_{atm}$),
- mesure de la pression différentielle ($\Delta P_{fap}$) aux bornes du filtre à particules (8),
- délivrance de la pression ($P_{ex}$) des gaz brûlés en sortie du moteur,
- détection d'une panne du capteur de pression des gaz d'échappement,
- estimation de la pression ($P_{ex}$) des gaz d'échappement à partir de la somme de la pression atmosphérique et de la pression différentielle ($\Delta P_{fap}$) aux bornes du filtre à particules :

$$P_{ex} = P_{atm} + \Delta P_{fap}$$

**Claims**

1. Method of estimating the pumping torque of an internal combustion engine for a motor vehicle, with fuel injection controlled by an electronic computer, from the swept volume ($\Delta V$) of the engine and the pressure difference ($\Delta P$)

between the manifold pressure (P$_{col}$) and the exhaust gas pressure (P$_{ex}$), **characterized in that** it consists in assigning an efficiency coefficient ($\eta$) to the product of the swept volume and the pressure difference, said efficiency coefficient considered as the product of a first coefficient ($\eta_1$) dependent on the difference between the manifold pressure (P$_{col}$) and the exhaust pressure (P$_{ex}$) and a second coefficient ($\eta_2$) dependent on the engine speed (N) and on the pressure (P$_{col}$) at the inlet of the air intake manifold, and in considering that the mean indicated pumping torque (CMI$_{bp}$) is equal to:

$$CMI_{bp} = \eta \times \frac{\Delta V \times \Delta P}{\Pi} = \eta_1 \times \eta_2 \times \frac{\Delta V \times \left(P_{col} - P_{ex}\right)}{\Pi}$$

$$CMI_{bp} = \eta_1\left(P_{col} - P_{ex}\right) \times \eta_2\left(N, P_{col}\right) \times \frac{\Delta V \times \left(P_{col} - P_{ex}\right)}{\Pi} .$$

2. Method of estimating the pumping torque of an internal combustion engine with fuel injection controlled by an electronic computer, from the swept volume ($\Delta V$) of the engine and the pressure difference ($\Delta P$) between the manifold pressure (P$_{col}$) and the exhaust gas pressure (P$_{ex}$), **characterized in that** it consists in assigning an efficiency coefficient ($\eta_1$) to the product of the swept volume and the pressure difference, said efficiency coefficient depending on the difference between the manifold pressure (P$_{col}$) and the exhaust pressure (P$_{ex}$), and in considering that the mean indicated pumping torque (CMI$_{bp}$) is equal to:

$$CMI_{bp} = \eta_1 \times \frac{\Delta V \times \Delta P}{\Pi} = \eta_1 \times \frac{\Delta V \times \left(P_{col} - P_{ex}\right)}{\Pi} = \eta_1\left(P_{col} - P_{ex}\right) \times \frac{\Delta V \times \left(P_{col} - P_{ex}\right)}{\Pi} .$$

3. Method of estimating the pumping torque of an internal combustion engine with fuel injection controlled by an electronic computer, from the swept volume ($\Delta V$) of the engine and the pressure difference ($\Delta P$) between the manifold pressure (P$_{col}$) and the exhaust gas pressure (P$_{ex}$), **characterized in that** it consists in assigning an efficieny coefficient ($\eta_2$) to the product of the swept volume and the pressure difference, said efficiency coefficient depending on the engine speed (N) and on the pressure (P$_{col}$) at the inlet of the air intake manifold, and in considering that the mean indicated torque (CMI$_{bp}$) is equal to:

$$CMI_{bp} = \eta_2 \times \frac{\Delta V \times \Delta P}{\Pi} = \eta_2 \times \frac{\Delta V \times \left(P_{col} - P_{ex}\right)}{\Pi} = \eta_2\left(N, P_{col}\right) \times \frac{\Delta V \times \left(P_{col} - P_{ex}\right)}{\Pi} .$$

4. Method of estimation according to either of Claims 1 and 2, **characterized in that** said efficiency coefficient ($\eta_1$) dependent on the difference between the manifold pressure (P$_{col}$) and the exhaust pressure (P$_{ex}$) is determined by a mapping established according to a defined number of support points as a function of the precision of the desired calculations and extrapolations, and dependent on the difference between the manifold pressure (P$_{col}$) and the pressure (P$_{ex}$) before the turbine.

5. Method of estimation according to either of Claims 1 and 3, **characterized in that** said efficiency coefficient ($\eta_2$) is established from a mapping carried out as a function of the engine speed (N) and the pressure (P$_{col}$) at the inlet of the air intake manifold, which is equal to the boost pressure (P$_{sural}$) when a turbocompressor is placed in the air intake circuit, according to a defined number of support points as a function of the precision of the desired calculations and extrapolations.

6. Method of estimation according to one of Claims 1, 2 and 3, **characterized in that** said efficiency coefficient ($\eta$, $\eta_1$,

$\eta_2$) is determined so that the mean indicated pumping torque ($CMI_{bp}$) is at or above a minimum threshold ($S_m$) and below a maximum threshold ($S_M$), close to zero so as to have only negative torque values.

7. Method of estimation according to either of Claims 1 and 2, **characterized in that** the pressure difference ($\Delta P$) between the manifold pressure ($P_{col}$) and the exhaust gas pressure ($P_{ex}$), calculated from the two pressure measurements, is filtered in a first-order low-pass filter, the time constant ($\tau$) of which is established by a mapping dependent on the engine speed (N), over a predefined number of support points.

8. Method of estimation according to one of Claims 1, 2 and 3, **characterized in that** the manifold pressure ($P_{col}$) is equal to the boost pressure ($P_{sural}$) at the inlet of the manifold, produced by the turbocompressor when the engine is equipped therewith.

9. Method of estimation according to one of Claims 1 to 8, **characterized in that**, in the case of an engine in which an intake flap (12) is controlled, in partial or almost complete closure mode and in which the sensor for measuring the pressure ($P_{col}$) is placed upstream of the intake flap (12) and downstream of the turbocompressor (4), it also carries out an evaluation of the pressure ($P_{col}$) in the air intake manifold from the boost pressure ($P_{sural}$) from which is subtracted a value that takes into account the air flow rate ($Q_{air}$) of the air flowing upstream of the intake flap and of the control signal ($C_0$) governing the opening of said flap expressed as a percentage, this value being the square of the air flow rate multiplied by the effective flow area (S) of the intake flap and assigned a coefficient (k), the product of the area (S) multiplied by k being itself a function of the control signal governing the opening of the intake flap, said signal being sent by the electronic injection computer, and of the air flow rate ($Q_{air}$), in such a way that the expression for the manifold pressure is the following:

$$P_{col} = P_{sural} - k \times S \times Q_{air}^{2}.$$

10. Method of estimation according to Claim 9, **characterized in that** the value of the product (kS), namely the effective flow area (S) of the intake flap multiplied by the coefficient (k), is calculated by a mapping from the control signal ($C_0$) governing the opening of the intake flap, sent by the electronic injection computer, and the air flow rate ($Q_{air}$).

11. Method of estimation according to one of Claims 1 to 10, **characterized in that** it includes, in the case of an engine equipped with a particulate filter, a degraded mode phase in the event of detected failure of the exhaust gas pressure sensor, comprising the following steps:

   - measurement of the atmospheric pressure ($P_{atm}$);
   - measure of the pressure difference ($\Delta P_{fap}$) across the terminals of the particulate filter (8);
   - delivery of the pressure ($P_{ex}$) of the burnt gas output by the engine;
   - detection of a failure of the exhaust gas pressure sensor; and
   - estimation of the exhaust gas pressure ($P_{ex}$) from the sum of the atmospheric pressure and the pressure difference ($\Delta P_{fap}$) across the terminals of the particulate filter, namely:

$$P_{ex} = P_{atm} + \Delta P_{fap}.$$

**Patentansprüche**

1. Verfahren zur Schätzung des Pumpmoments eines Wärmemotors für ein Kraftfahrzeug mit von einem Elektronenrechner überwachter Kraftstoffeinspritzung ausgehend vom Hubraum ($\Delta V$) des Motors und der Druckdifferenz ($\Delta P$) zwischen dem Druck ($P_{col}$) im Krümmer und dem Druck ($P_{ex}$) der Abgase, **dadurch gekennzeichnet, dass** es darin besteht, das Produkt aus dem Hubraum und der Druckdifferenz mit einem Form-Leistungskoeffizienten ($\eta$) zu versehen, der als das Produkt aus einem ersten Koeffizienten ($\eta_1$), der von der Differenz zwischen dem Krümmerdruck ($P_{col}$) und dem 'Druck ($P_{ex}$) am Auspuff abhängt, und einem zweiten Koeffizienten ($\eta_2$) betrachtet wird, der von der Drehzahl (N) des Motors und dem Druck ($P_{col}$) am Eingang des Luftansaugkrümmers abhängt, und anzunehmen, dass das mittlere angezeigte Pumpmoment ($CMI_{bp}$) entspricht:

$$CMI_{bp} = \eta * \frac{\Delta V * \Delta P}{\Pi} = \eta_1 * \eta_2 * \frac{\Delta V * (P_{col} - P_{ex})}{\Pi}$$

$$CMI_{bp} = \eta_1 (P_{col} - P_{ex}) * \eta_2 (N, P_{col}) * \frac{\Delta V * (P_{col} - P_{ex})}{\Pi}$$

2. Verfahren zur Schätzung des Pumpmoments eines Wärmemotors mit von einem Elektronenrechner überwachter Kraftstoffeinspritzung ausgehend vom Hubraum ($\Delta V$) des Motors und der Druckdifferenz ($\Delta P$) zwischen dem Druck ($P_{col}$) im Krümmer und dem Druck ($P_{ex}$) der Abgase, **dadurch gekennzeichnet, dass** es darin besteht, das Produkt aus dem Hubraum und der Druckdifferenz mit einem Form-Leistungskoeffizienten ($\eta_1$) zu versehen, der von der Differenz zwischen dem Krümmerdruck ($P_{col}$) und dem Druck ($P_{ex}$) am Auspuff abhängt, und anzunehmen, dass das mittlere angezeigte Pumpmoment ($CMI_{bp}$) entspricht:

$$CMI_{bp} = \eta_1 * \frac{\Delta V * \Delta P}{\Pi} = \eta_1 * \frac{\Delta V * (P_{col} - P_{ex})}{\Pi} = \eta_1 (P_{col} - P_{ex}) * \frac{\Delta V * (P_{col} - P_{ex})}{\Pi}$$

3. Verfahren zur Schätzung des Pumpmoments eines Wärmemotors mit von einem Elektronenrechner überwachter Kraftstoffeinspritzung ausgehend vom Hubraum ($\Delta V$) des Motors und der Druckdifferenz ($\Delta P$) zwischen dem Druck ($P_{col}$) im Krümmer und dem Druck ($P_{ex}$) der Abgase, **dadurch gekennzeichnet, dass** es darin besteht, das Produkt aus dem Hubraum und der Druckdifferenz mit einem Form-Leistungskoeffizienten ($\eta_2$) zu versehen, der von der Drehzahl (N) des Motors und dem Druck ($P_{col}$) am Eingang des Luftansaugkrümmers abhängt, und anzunehmen, dass das mittlere angezeigte Pumpmoment ($CMI_{bp}$) entspricht:

$$CMI_{bp} = \eta_2 * \frac{\Delta V * \Delta P}{\Pi} = \eta_2 * \frac{\Delta V * (P_{col} - P_{ex})}{\Pi} = \eta_2 (N, P_{col}) * \frac{\Delta V * (P_{col} - P_{ex})}{\Pi}$$

4. Schätzverfahren nach einem der Ansprüche 1 oder 2, **dadurch gekennzeichnet, dass** der von der Differenz zwischen dem Krümmerdruck ($P_{col}$) und dem Druck ($P_{ex}$) am Auspuff abhängende Form-Leistungskoeffizient ($\eta_1$) durch Kartographie bestimmt wird, die gemäß einer Anzahl von Stützpunkten erstellt wird, die in Abhängigkeit von der Präzision der gewünschten Berechnungen und Extrapolationen definiert wird, und von der Differenz zwischen dem Krümmerdruck ($P_{col}$) und dem Druck vor Turbine ($P_{ex}$) abhängt.

5. Schätzverfahren nach einem der Ansprüche 1 oder 3, **dadurch gekennzeichnet, dass** der Form-Leistungskoeffizient ($\eta_2$) ausgehend von einer Kartographie erstellt wird, die in Abhängigkeit von der Drehzahl (N) des Motors und vom Druck ($P_{col}$) am Eingang des Luftansaugkrümmers, der gleich dem Aufladungsdruck ($P_{sural}$) ist, wenn ein Turbokompressor in der Luftansaugleitung angeordnet ist, gemäß einer Anzahl von Stützpunkten hergestellt wird, die in Abhängigkeit von der Präzision der gewünschten Berechnungen und Extrapolationen definiert wird.

6. Schätzverfahren nach einem der Ansprüche 1, 2 oder 3, **dadurch gekennzeichnet, dass** der Form-Leistungskoeffizient ($\eta$, $\eta_1$, $\eta_2$) so bestimmt wird, dass das angezeigte mittlere Pumpmoment ($CMI_{bp}$) größer als ein oder gleich einem Mindestschwellwert ($S_m$) und geringer als ein Höchstschwellwert ($S_M$) nahe Null ist, um nur negative Momentwerte zu haben.

**7.** Schätzverfahren nach einem der Ansprüche 1 oder 2, **dadurch gekennzeichnet, dass** die Druckdifferenz ($\Delta P$) zwischen dem Druck ($P_{col}$) im Krümmer und dem Druck ($P_{ex}$) der Abgase, berechnet ausgehend von den zwei Druckmessungen, in einem Tiefpassfilter erster Ordnung gefiltert wird, dessen Zeitkonstante ($\tau$) durch eine von der Drehzahl (N) des Motors abhängige Kartographie über eine vordefinierte Anzahl von Stützpunkten erstellt wird.

**8.** Schätzverfahren nach einem der Ansprüche 1, 2 oder 3, **dadurch gekennzeichnet, dass** der Druck ($P_{col}$) im Krümmer gleich dem Aufladungsdruck ($P_{sural}$) am Eingang des Krümmers ist, der vom Turbokompressor erzeugt wird, wenn der Motor damit ausgestattet ist.

**9.** Schätzverfahren nach einem der Ansprüche 1 bis 8, **dadurch gekennzeichnet, dass** es bei einem Motor, bei dem das teilweise oder praktisch vollständige Schließen einer Einlassklappe (12) gesteuert wird, und bei dem der Messfühler des Drucks ($P_{col}$) sich vor der Einlassklappe (12) und hinter dem Turbokompressor (4) befindet, außerdem eine Abschätzung des Drucks ($P_{col}$) im Luftansaugkrümmer ausgehend vom Aufladungsdruck ($P_{sural}$) durchführt, von der ein Wert entnommen wird, der die vor der Einlassklappe strömende Luftdurchsatzmenge ($Q_{air}$) und die Öffnungssteuerung ($C_0$) der Klappe, als Öffnungsprozentsatz ausgedrückt, berücksichtigt, wobei dieser Wert das Produkt aus dem Quadrat der Luftdurchsatzmenge und dem effektiven Öffnungsquerschnitt (S) der Einlassklappe ist, der mit einem Koeffizienten (k) versehen ist, wobei das Produkt aus dem Querschnitt (S) und k selbst von der Öffnungssteuerung der Einlassklappe, die vom Einspritz-Elektronenrechner geschickt wird, und von der Luftdurchsatzmenge ($Q_{air}$) abhängt, so dass der Ausdruck des Krümmerdrucks folgendermaßen ist:

$$P_{col} = P_{sural} - k * S * Q_{air}^2$$

**10.** Schätzverfahren nach Anspruch 9, **dadurch gekennzeichnet, dass** der Wert des Produkts (k*S) aus dem tatsächlichen Öffnungsquerschnitt (S) der Einlassklappe und dem Koeffizienten (k) durch Kartographie ausgehend von der vom Einspritz-Elektronenrechner geschickten Öffnungssteuerung ($C_0$) der Einlassklappe und vom Luftdurchsatz ($Q_{air}$) berechnet wird.

**11.** Schätzverfahren nach einem der Ansprüche 1 bis 10, **dadurch gekennzeichnet, dass** es bei einem mit einem Partikelfilter ausgestatteten Motor im Fall eines erfassten Ausfalls des Abgas-Druckmessfühlers eine Phase im Notbetriebmodus aufweist, die die folgenden Schritte enthält:

- Messung des Luftdrucks ($P_{atm}$),
- Messung des Differentialdrucks ($\Delta P_{fap}$) an den Anschlüssen des Partikelfilters (8),
- Lieferung des Drucks ($P_{ex}$) der verbrannten Gase am Ausgang des Motors,
- Erfassung eines Ausfalls des Abgas-Druckmessfühlers,
- Schätzung des Drucks ($P_{ex}$) der Abgase ausgehend von der Summe des Luftdrucks und des Differentialdrucks ($\Delta P_{fap}$) an den Anschlüssen des Partikelfilters:

$$P_{ex} = P_{atm} + \Delta P_{fap}$$

FIG_1

# FIG_2

```
┌─────────────────┐     ┌──────────────┐
│ DEMANDE COUPLE  │     │     CME      │
│ CONDUCTEUR OU   │────▶│   SORTIE     │──── + ──── + ──── + ──── + ──── + ───▶ CMI_hp ─── + ─── Q_t
│  INTER-SYSTEME  │     │  VILEBREQUIN │
└─────────────────┘     └──────────────┘
```

ACCESSOIRES ENTRAINES

CONSOMMATEURS ELECTRIQUES

POMPE HP

CMF

CMI$_{bp}$

CONVERSION COUPLE / DÉBIT

CME INTER-SYSTEME

CMI$_{hp}$

Q$_t$

EP 1 347 163 B1

FIG_3

FIG_4

## FIG_5

## FIG_6